# FASCICULE DE BREVET EUROPEEN

(11) **EP 0 434 857 B1**
(45) Date de publication et mention de la délivrance du brevet: **29.12.1993**
(21) Numéro de dépôt: 89123929.5
(22) Date de dépôt: 27.12.1989
(51) Int. Cl.: A23G 9/28, A23G 9/26, A23G 9/24

(54) **Procédé et appareil de fabrication d'un article de confiserie glacée**
Verfahren und Vorrichtung zur Herstellung eines Speiseeisartikels
Process and apparatus for making an iced confectionery article

(43) Date de publication de la demande: 03.07.1991
(73) Titulaire: FRISCO-FINDUS AG, CH-9400 Rorschach (CH)
(72) Inventeur: Daouse, Alain, F-60430 Noailles (FR)

(56) Documents cités:
- EP-A- 0 234 376
- EP-A- 0 322 469
- EP-A- 0 328 170
- FR-A- 2 511 848
- GB-A- 2 134 438
- US-A- 2 190 226
- US-A- 2 866 420
- US-A- 3 267 971

## Description

L'invention concerne un procédé et un appareil de fabrication d'un article de confiserie glacée contenant des feuillets de composition croquante dans sa masse.

Dans le domaine des articles de confiserie glacée en portion individuelle du type des bâtonnets, sucettes, cônes, cylindres, pots et analogues, il existe des articles contenant des paillettes de chocolat réparties dans la masse de crème glacée.

Dans le but de produire des textures nouvelles, on a proposé aux consommateurs des articles de confiserie glacée contenant des lames minces de matière croquante leur conférant une texture feuilletée.

Ainsi, selon EP-A-322.469 on fabrique des articles tels que les bâtonnets ou cônes feuilletés, par formation successive de couches de crème glacée et de couches minces de chocolat par congélation partielle de la crème glacée à la périphérie, aspiration de la partie centrale encore liquide, pulvérisation de chocolat dans l'alvéole ainsi créée, puis remplissage de la partie centrale avec de la crème glacée. Du fait des contraintes de fabrication, les articles obtenus possèdent des couches minces croquantes longitudinales continues de révolution dont le nombre est relativement limité.

Selon EP-A-221757, on a proposé de fabriquer des cônes ou bâtonnets glacés contenant dans leur masse de minces copeaux de chocolat en créant dans un boudin de crème glacée extrudé verticalement des gorges longitudinales à l'aide de déflecteurs et en remplissant les gorges ainsi formées avec du chocolat, les veines de chocolat rendu solide au contact de la crème glacée se brisant de manière aléatoire en copeaux lorsque le boudin se replie sur lui-même en remplissant le moule. La texture obtenue n'est pas la même que si les lames minces de chocolat formaient des feuillets pratiquement continus. On a constaté en effet que la sensation était réellement agréable lorsque la dent traversait des couches minces contrastées de matière moelleuse et de matière croquante bien discernables.

US-A-3.267.971 décrit un procédé et un appareil pour fabriquer un article de confiserie glacée de révolution comprenant une masse centrale uniforme de crème glacée et une veine de sirop de couleur différente de celle de la crème glacée en forme de spirale à la périphérie, l'article étant emballé dans un pot transparent, de manière à rendre apparent l'élément décoratif présenté par la spirale.

Le but de l'invention est de mettre à disposition un article de confiserie glacée du type précédent contenant une grande quantité de feuillets de composition croquante disposés transversalement se présentant sous forme de rubans pratiquement continus.

L'invention concerne donc un procédé de fabrication d'un article de confiserie glacée contenant des feuillets de composition croquante disposés en spirale dans sa masse, dans lequel on remplit un moule de révolution au moyen d'un ensemble d'extrusion intégré comprenant une buse d'extrusion de la composition glacée et une buse de dosage de composition croquante dont l'ajutage est sensiblement parallèle à celui de la buse d'extrusion de la composition glacée et au voisinage de celle-ci.

Le procédé de l'invention est caractérisé par le fait que l'ensemble d'extrusion est désaxé par rapport à l'axe du moule,
qu'il est animé d'un mouvement de rotation continue de sorte qu'il garde toujours la même orientation dans l'espace,
que ledit ensemble d'extrusion descend dans le moule, puis remonte tout en délivrant à partir des buses des rubans superposés de confiserie glacée et de composition croquante, de sorte que la résultante des mouvements lors de l'extrusion soit un mouvement de vrille et que lesdites buses balayent la section moyenne du moule de manière à assurer un bon recouvrement des rubans déposés.

Le procédé selon l'invention s'applique particulièrement mais non exclusivement à la fabrication des cônes glacés. Dans ce cas préféré, le moule est constitué d'un cornet en gaufrette, de préférence revêtu à l'intérieur d'une fine couche de couverture grasse jouant le rôle de barrière d'humidité. Pour fabriquer de tels articles, on place les gaufrettes dans des trous ménagés dans des plaques solidaires d'une chaîne. La chaîne est animée d'un mouvement d'avancement pas à pas. Les cônes de gaufrette se présentent ainsi devant le dispositif de remplissage et restent de préférence immobiles pendant le remplissage. Une fois remplis, il cheminent dans un tunnel d'air froid où leur contenu durcit.

Selon une réalisation avantageuse du procédé permettant une augmentation de la cadence de remplissage, le mouvement de baisse peut être décomposé en deux mouvements de translation d'abord rapide puis lente et le mouvement de monte en deux mouvements d'abord lent pendant le remplissage, puis rapide une fois le remplisssage fini.

L'invention concerne également un procédé caractérisé par le fait que l'on monte le moule de manière à coiffer l'ensemble d'extrusion, que ledit ensemble d'extrusion est fixe et désaxé par rapport à l'axe du moule,
que ledit moule est animé d'un mouvement combiné de rotation autour de son axe et de translation verticale, résultant en un mouvement de vrille de haut en bas pendant l'extrusion,
que les buses déposent des rubans superposés de confiserie glacée et de composition croquante et que les dites buses balayent la section moyenne du moule de manière à assurer un bon recouvrement des rubans déposés.

On voit bien que quelle que soit la variante choisie, le mouvement résultant relatif de l'ensemble d'extrusion et du moule correspond à un mouvement de vrille selon lequel l'ensemble d'extrusion s'écarte du moule au fur et à mesure du remplisage.

L'invention concerne également un appareil de fabrication d'un article de confiserie glacée contenant des feuillets de composition croquante disposés en spirale dans une masse de composition glacée, comprenant un moule de forme de révolution destiné à recevoir la confiserie glacée, un support disposé de manière qu'il garde toujours la même orientation dans l'espace et un ensemble d'extrusion intégré fixé au support, comprenant une buse d'extrusion de composition glacée et une buse de dosage de composition croquante dont l'ajutage est sensiblement parallèle à celui de la buse d'extrusion de la composition glacée et au voisinage de celle-ci, caractérisé par le fait qu'il comprend des moyens de mise en mouvement de rotation horizontale continue du support relativement au moule, ledit moule étant fixe, des moyens de mise en mouvement vertical alternatif du support relativement au moule et que l'ensemble d'extrusion est désaxé par rapport à l'axe du moule.

L'invention concerne également l'appareil de fabrication d'un article de confiserie glacée contenant des feuillets de composition croquante disposés en spirale dans une masse de composition glacée, comprenant un moule de forme de révolution destiné à recevoir la confiserie glacée, un support disposé de manière qu'il garde toujours la même orientation dans l'espace et un ensemble d'extrusion intégré fixé au support , comprenant une buse d'extrusion de composition glacée et une buse de dosage de composition croquante dont l'ajutage est sensiblement parallèle à celui de la buse d'extrusion de la composition glacée et au voisinage de celle-ci,
caractérisé par le fait que le support est fixe, que le moule est animé d'un mouvement combiné de rotation autour de son axe et de translation verticale relativement à l'ensemble d'extrusion par des moyens de mise en mouvement et que l'ensemble d'extrusion est désaxé par rapport à l'axe du moule.

L'invention sera mieux comprise à partir de la description qui va suivre, faite en regard des dessins annexés montrés à titre d'exemple dans lesquels:
- la figure 1 illustre schématiquement l'appareil pendant le remplissage,
- la figure 2 est une vue en coupe partielle des moyens de mise en mouvement rotatif du support,
- la figure 3 est une vue de dessus des moyens de mise en mouvement de monte et de baisse du support,
- la figure 4 est une coupe selon I-I de la figure 3,
- la figure 5 est une vue schématique de détail des buses d'extrusion.

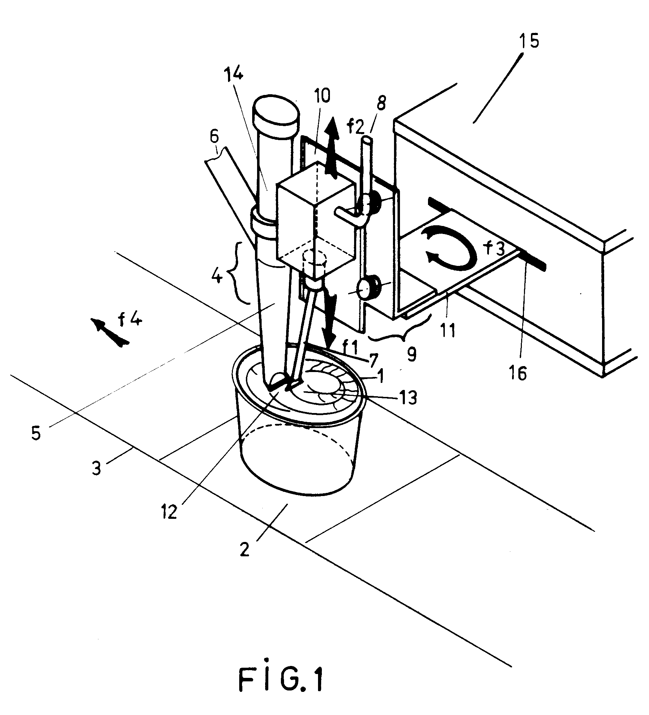

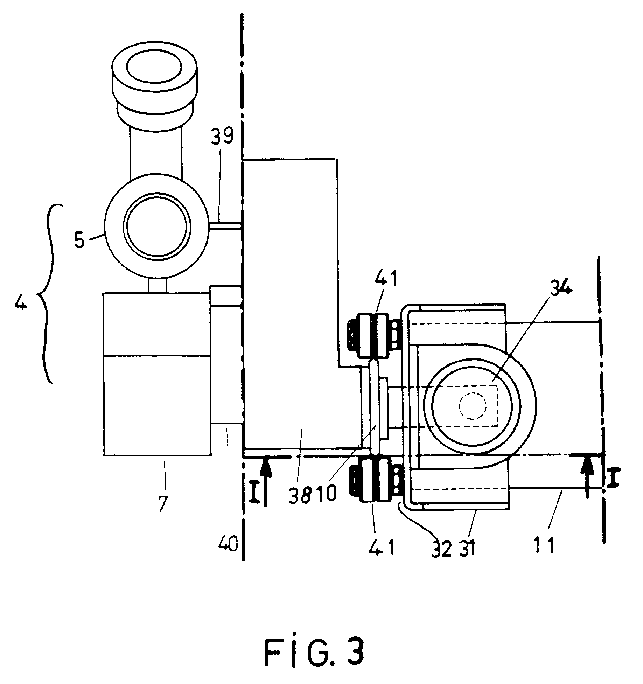

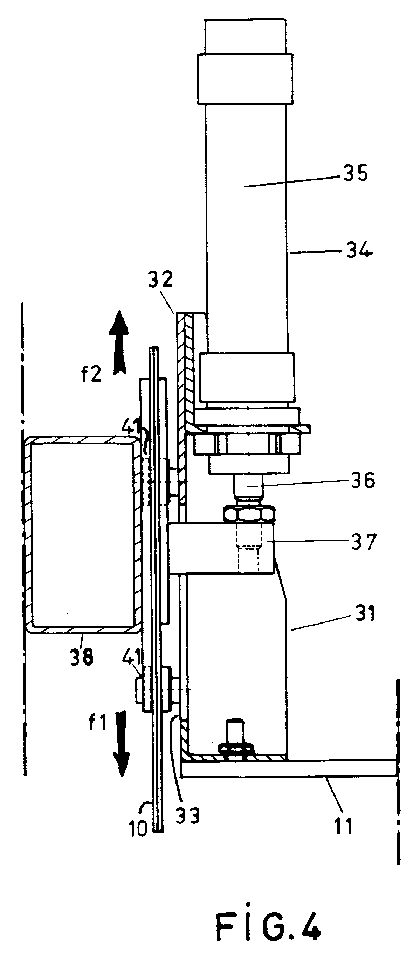

A la figure 1, un cornet de gaufrette 1 déjà revêtu intérieurement d'une couche de couverture de chocolat est porté par une plaque 2 perforée pour recevoir le cône. La plaque 2 est solidaire d'une chaîne sans fin 3 et stationne sous l'ensemble d'extrusion 4, le temps d'arrêt de la chaîne correspondant à la durée du remplissage. L'ensemble d'extrusion 4 est constitué d'une buse d'extrusion 5 alimentée en crème glacée en 6 et d'une buse de pulvérisation de chocolat 7 alimentée en chocolat en 8. L'ensemble d'extrusion est fixé sur un support 9 comprenant une glissière verticale 10 permettant son mouvement de monte et de baisse et une plaque horizontale 11 animée d'un mouvement de rotation continu. Le mouvement de monte et de baisse du support indiqué par les flèches f1, f2 sera expliqué en détail plus loin en liaison avec les figures 3 et 4.

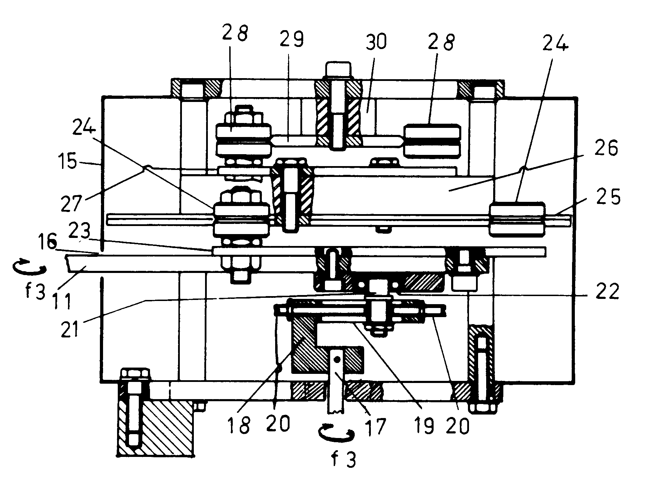

Le mouvement de rotation du support indiqué par la flèche f3 sera expliqué en détail plus loin en liaison avec la figure 2.

L'ensemble d'extrusion est désaxé par rapport à l'axe du cornet. L'amplitude du mouvement de rotation du dit ensemble ainsi que la largeur des buses plates sont légèrement inférieures au rayon moyen du cornet. De cette manière, lesdites buses balayent la section moyenne du cornet de manière à assumer un bon recouvrement des couches.

Pour le remplissage, l'ensemble d'extrusion 4 descend dans le cornet 1 jusqu'à environ la moitié de sa longueur tout en tournant puis la crème glacée 12 et le chocolat 13 sont extrudés simultanément en rubans superposés tandis que l'ensemble d'extrusion remonte dans un mouvement résultant de vrille.

Lorsque le cornet est rempli, on interrompt simultanément les alimentations en crème glacée et en chocolat. L'interruption de l'alimentation en crème glacée s'effectue par l'intermédiaire d'une soupape à piston non représentée actionnée par le vérin pneumatique 14. De cette manière, on évite la formation de gouttes entre les remplissages. Pour ce qui est du chocolat, la buse de pulvérisation est associée à un pistolet qui permet la pulvérisation de produits liquides visqueux dite "de basse pression", par exemple de l'ordre de 0,5 à 1 bar par rapport à la pression atmosphérique.

L'interruption de l'alimentation en chocolat est réalisée par un clapet non représenté commandé par un détecteur magnétique non représenté de fin de course du piston du vérin 14.

Dans un mode de réalisation avantageux permettant d'augmenter la cadence de remplissage, dès que le cornet se présente au remplissage, l'ensemble d'extrusion peut descendre d'abord rapidement à partir de sa position la plus haute, puis plus lentement. Le remplissage peut s'effectuer par remontée lente de l'ensemble d'extrusion, puis une fois le remplissage fini, remontée rapide de celui-ci pour le dégager du cornet rempli. Ainsi les mouvements de baisse et de monte peuvent être décomposés chacun en deux séquences de vitesses différentes.

Une fois l'ensemble d'extrusion dégagé du cornet, la chaîne 3 peut avancer de la distance d'une plaque dans la direction de la flèche f4 sous l'action d'un moteur pas à pas non représenté et présente ainsi un nouveau cornet au remplissage. La séquence des opérations décrite précédemment peut alors recommencer.

En référence aux figures 1 et 2, le mécanisme d'entraînement en rotation du support 9 est contenu dans le boîtier 15 et supporté par un bâti portant un moteur non représenté. Une fente 16 est ménagée dans le boîtier 15 par laquelle passe la plaque 11.

Le moteur entraîne en permanence l'arbre 17. A l'arbre 17 est fixée une manivelle 18 dont le levier 19 est réglable par l'intermédiaire des vis 20 qui viennent s'appuyer sur le goujon 21 qui peut, avant serrage des vis 20, coulisser le long d'une lumière ménagée dans le bras du levier.

Le goujon 21 vient se loger dans le palier 22 monté sur roulement à billes et constitue l'oeil articulé de la manivelle. Le palier 22 est fixé à la plaque 11, elle-même solidaire de la plaque 23, laquelle porte un premier ensemble de 4 galets 24. Les galets 24 peuvent rouler librement sur la glissière 25, ce qui permet le déplacement latéral de la plaque 11. A la glissière 25 est fixé un bloc de distance 26 auquel est fixée à son tour une plaque 27 portant un second ensemble de galets 28. Les galets 28 peuvent rouler librement sur la glissière 29, laquelle est fixée au boîtier 15 par l'intermédiaire du bloc de distance 30. La glissière fixe 29 est perpendiculaire à la glissière mobile 25, ce qui permet le déplacement longitudinal de la plaque 11.

On comprend aisément que l'ensemble d'extrusion garde toujours la même orientation dans l'espace du fait que chaque point de la plaque 11 décrit un cercle horizontal.

Aux figures 3 et 4, la plaque 11 porte la console 31 dont la face verticale 32 en regard de l'ensemble d'extrusion est ouverte par une fenêtre rectangulaire 33. Un vérin de monte et de baisse 34 comporte un corps 35 fixé à la partie supérieure de la console 31 et un piston dont la tige 36 est solidaire d'une patte horizontale 37 qui traverse la fenêtre 33. La glissière 10 est fixée verticalement d'un côté à la patte 37 et de l'autre au bloc de distance 38. Le bloc 38 porte à son tour la buse d'extrusion 5 et la buse de pulvérisation 7 fixées à celui-ci respectivement par la patte 39 et la plaque 40. La glissière 10 coulisse librement entre les galets 41 solidaires de la console 31. Associés au piston du vérin 34, des détecteurs magnétiques de fin de course non représentés permettent de commander l'interruption de l'alimentation en crème glacée de la buse d'extrusion ainsi que du chocolat en position haute du piston et l'ouverture des alimentations en position basse.

Dans le mode de réalisation évoqué précédemment comprenant des mouvements séquentiels de baisse et de monte, chaque séquence est commandée par un vérin, par exemple un vérin de course longue assurant le déplacement lent qui, en fin de course actionne un vérin de course courte réalisant le déplacement rapide. Le vérin 34 est alors remplacé par deux vérins agissant l'un après l'autre - non représentés par souci de clarté des figures.

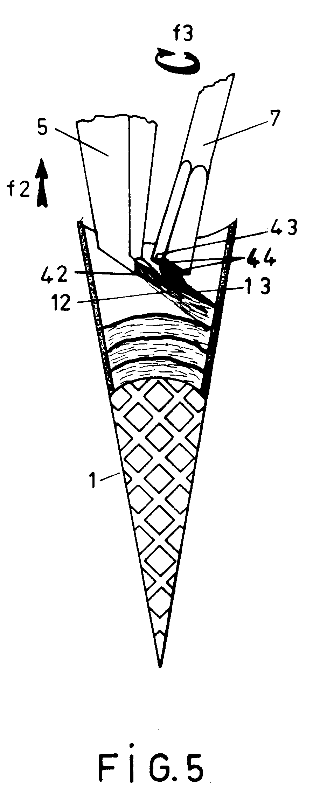

A la figure 5, on voit la manière dont les couches successives de crème glacée 12 et de chocolat 13 se forment. Du fait que l'ajutage horizontal 42 de la buse plate d'extrusion est juste en dessous de l'ajutage 43 qui est parallèle à l'ajutage 42, les fines couches se forment ensemble et la couche de chocolat est refroidie au contact de la couche de crème glacée sans toutefois être encore cassante. Les orifices 44 dans la buse de pulvérisation sont nettement plus grands que ceux d'une buse de pulvérisation de chocolat classique, par exemple de 0,5 à 1 mm de diamètre, si bien que le chocolat coule plutôt qu'il n'est projeté. Les orifices 44 sont répartis le long de l'ajutage 43 de manière à assurer un bon étalement du chocolat et la formation d'un ruban. La crème glacée est extrudée à une température de -5° à -3°C et le chocolat à environ 32°C. Le poids de chocolat correspond à environ 10-15% du poids de la crème glacée.

Dans la description détaillée, on a représenté un ensemble d'extrusion remplissant entièrement un seul cornet. On peut avantageusement accoupler par exemple deux ensembles d'extrusion situés en ligne par exemple à une distance de 5 cornets l'un de l'autre, chaque ensemble exécutant la moitié du remplissage d'un cornet. Dans ce cas, le mécanisme d'entraînement en rotation pourra être monté sur un support commun aux deux ensembles d'extrusion et comprendre deux ensembles de glissières fixes et mobiles relatives à chaque ensemble d'extrusion avec un arbre d'entraînement en rotation commun, situé par exemple entre les deux ensembles de glissières.

Enfin, on a montré le remplissage d'une seule file de cornets. On peut bien entendu envisager le remplissage simultané de plusieurs files de cornets constituant des rangées sans sortir du cadre de l'invention.

Dans la description détaillée, on a montré une masse de crème glacée avec de fines couches intermédiaires de chocolat. La masse de confiserie glacée peut être constituée d'une composition glacée aérée autre que la crème glacée, par exemple un sorbet aéré de consistance moelleuse. La crème glacée ou le sorbet peut contenir des petits morceaux de fruits confits, de fruits séchés, de noix, de noisettes par exemple. Les morceaux de fruits de même que les sorbets peuvent être aromatisés aux alcools et liqueurs.

La composition croquante est dure et cassante. Elle peut être constituée d'un beurre végétal comme le beurre de cacao, un produit de remplacement ou un équivalent du beurre de cacao, une huile végétale durcie, une fraction de graisse végétale ou une graisse transesterifiée. Ce peut être également une composition aqueuse sucrée, par exemple un sirop à base de sucre cuit et dans ce cas, elle sera utilisée en liaison avec un sorbet. Une telle composition, à base de graisse ou de sirop peut contenir des additifs, par exemple des colorants, des arômes choisis en fonction du contraste désiré avec les couches voisines de matière moelleuse. La matière croquante doit pouvoir être appliquée en couche mince. Elle est suffisamment mince pour se briser en petits éclats sous la dent, en pratique d'épaisseur inférieure à 1 mm et spécialement inférieure à 0,5 mm.

On a montré un article se présentant sous la forme d'un cône glacé. L'article peut également se présenter sous la forme d'une sucette glacée de section circulaire et comporter un bâton de préhension en son centre. Dans ce cas, il doit encore être démoulé et éventuellement enrobé d'une couche de couverture. L'article peut également se présenter sous la forme d'un pot. Dans ce dernier cas, on consommera la confiserie glacée par exemple à l'aide d'une cuiller et la texture feuilletée apportera une sensation gustative nouvelle aux portions.

## Revendications

1. Procédé de fabrication d'un article de confiserie glacée contenant des feuillets de composition croquante (13) disposés en spirale dans sa masse (12), dans lequel on remplit un moule (1) de révolution au moyen d'un ensemble d'extrusion (4) intégré comprenant une buse (5) d'extrusion de la composition glacée et une buse (7) de dosage de composition croquante dont l'ajutage (42) est sensiblement parallèle à celui (43) de la buse d'extrusion de la composition glacée et au voisinage de celle-ci,
Caractérisé par le fait que l'ensemble d'extrusion (4) est désaxé par rapport à l'axe du moule (1),
qu'il est animé d'un mouvement de rotation continue (f3) de sorte qu'il garde toujours la même orientation dans l'espace,
que ledit ensemble d'extrusion (4) descend (f1) dans le moule (1), puis remonte (f2) tout en délivrant à partir des buses des rubans superposés de confiserie glacée (12) et de composition croquante (13), de sorte que la résultante des mouvements lors de l'extrusion soit un mouvement de vrille et
que lesdites buses (5, 7) balayent la section moyenne du moule (1) de manière à assurer un bon recouvrement des rubans déposés.

2. Procédé de fabrication d'un article de confiserie glacée contenant des feuillets de composition croquante (13) disposés en spirale dans sa masse (12), dans lequel on remplit un moule (1) de révolution au moyen d'un ensemble d'extrusion (4) intégré comprenant une buse (5) d'extrusion de la composition glacée et une buse (7) de dosage de composition croquante dont l'ajutage (42) est sensiblement parallèle à celui (43) de la buse d'extrusion de la composition glacée et au voisinage de celle-ci,
Caractérisé par le fait que l'on monte le moule (1) de manière à coiffer l'ensemble d'extrusion (4), que ledit ensemble d'extrusion (4) est fixe et désaxé par rapport à l'axe du moule (1),
que ledit moule (1) est animé d'un mouvement combiné de rotation autour de son axe et de translation verticale, résultant en un mouvement de vrille de haut en bas pendant l'extrusion,
que les buses (5, 7) déposent des rubans superposés de confiserie glacée (12) et de composition croquante (13) et que lesdites buses (5, 7) balayent la section moyenne du moule (1) de manière à assurer un bon recouvrement des rubans déposés.

3. Procédé selon la revendication 1 ou 2 caractérisé par le fait que l'article est un cône de crème glacée contenant des feuillets de chocolat et que le moule (1) est une gaufrette revêtue à l'intérieur d'une fine couche de chocolat.

4. Article de confiserie glacée obtenu par la mise en oeuvre du procédé selon l'une des revendications 1 à 3.

5. Appareil de fabrication d'un article de confiserie glacée contenant des feuillets de composition croquante (13) disposés en spirale dans une masse (12) de composition glacée, comprenant un moule (1) de forme de révolution destiné à recevoir la confiserie glacée, un support (9) disposé de manière qu'il garde toujours la même orientation dans l'espace et un ensemble d'extrusion (4) intégré fixé au support (9), comprenant une buse (5) d'extrusion de composition glacée et une buse (7) de dosage de composition croquante dont l'ajutage (42) est sensiblement parallèle à celui (43) de la buse d'extrusion de la composition glacée et au voisinage de celle-ci, caractérisé par le fait qu'il comprend des moyens (11,17) de mise en mouvement de rotation (f3) horizontale continue du support (9) relativement au moule (1), ledit moule (1) étant fixe, des moyens (10, 31, 41, 34, 37) de mise en mouvement vertical alternatif (f1, f2) du support (9) relativement au moule (1) et que l'ensemble d'extrusion (4) est désaxé par rapport à l'axe du moule.

6. Appareil selon la revendication 5, caractérisé par le fait que le support (9) comprend une plaque horizontale (11) reliée aux moyens de rotation (17) et une console verticale (31) portant les moyens de translation (10, 41, 34).

7. Appareil selon la revendication 6, caractérisé par le fait que les moyens de rotation comprennent un moteur (17) agissant sur une manivelle (18) en prise avec la plaque (11) horizontale du support (9), ladite plaque (11) horizontale étant guidée par l'intermédiaire de deux glissières (25,29) orthogonales coulissantes.

8. Appareil selon la revendication 6, caractérisé par le fait que les moyens de translation comprennent un vérin (34) de monte et de baisse dont le corps (35) est fixé sur la console (31) et dont le piston agit sur une glissière coulissante (10) à laquelle est fixé l'ensemble d'extrusion (4).

9. Appareil selon la revendication 5, caractérisé par le fait que les moyens de translation comprennent deux vérins de monte et de baisse agissant l'un derrière l'autre.

10. Appareil de fabrication d'un article de confiserie glacée contenant des feuillets de composition croquante (13) disposés en spirale dans une masse (12) de composition glacée, comprenant un moule (1) de forme de révolution destiné à recevoir la confiserie glacée, un support (9) disposé de manière qu'il garde toujours la même orientation dans l'espace et un ensemble d'extrusion (4) intégré fixé au support (9), comprenant une buse (5) d'extrusion de composition glacée et une buse (7) de dosage de composition croquante dont l'ajutage (42) est sensiblement parallèle à celui (43) de la buse d'extrusion de la composition glacée et au voisinage de celle-ci, caractérisé par le fait que le support (9) est fixe, que le moule (1) est animé d'un mouvement combiné de rotation autour de son axe et de translation verticale relativement à l'ensemble d'extrusion (4) par des moyens de mise en mouvement et que l'ensemble d'extrusion (4) est désaxé par rapport à l'axe du moule.

## Claims

1. A process for the production of an article of ice confectionery containing flakes of crispy composition (13) arranged spirally within its mass (12), in which a mould (1) in the form of a body of revolution is filled by an integrated extrusion assembly (4) comprising an extrusion tube (5) for the ice composition and a tube (7) for dispensing the crispy composition of which the nozzle (42) is substantially parallel to that (43) of the extrusion tube for the ice composition and in the vicinity thereof, characterized in that the extrusion assembly (4) is offset in relation to the axis of the mould (1) and is continuously rotated (f3) so that it keeps the same orientation in space,
in that the extrusion assembly (4) descends (f1) into the mould and then rises therefrom (f2), extruding superposed ribbons of ice confectionery (12) and crispy composition (13) from the tubes so that the resultant of the movements during extrusion is a spinning movement and in that the tubes (5,7) sweep over the mean cross-section of the mould to ensure that the ribbons applied have good coverage.

2. A process for the production of an article of ice confectionery containing flakes of crispy composition (13) arranged spirally within its mass (12), in which a mould (1) in the form of a body of revolution is filled by an integrated extrusion assembly (4) comprising an extrusion tube (5) for the ice composition and a tube (7) for dispensing the crispy composition of which the nozzle (42) is substantially parallel to that (43) of the extrusion tube for the ice composition and in the vicinity thereof, characterized in that the mould (1) is raised so that it surrounds the extrusion assembly (4),
in that the extrusion assembly is fixed and offset in relation to the axis of the mould (1), in that the mould (1) rotates about its axis and at the same time is vertically displaced, resulting in a downward spinning movement during extrusion, in that the tubes (5,7) extrude superposed ribbons of ice confectionery (12) and crispy composition (13) and in that the tubes (5,7) sweep over the mean cross-section of the mould to ensure that the ribbons applied have good coverage.

3. A process as claimed in claim 1 or 2, characterized in that the article is an ice cream cone containing flakes of chocolate and in that the mould (1) is a wafer coated internally with a thin layer of chocolate.

4. An article of ice confectionery obtained by the process claimed in any of claims 1 to 3.

5. An apparatus for the production of an article of ice confectionery containing flakes of crispy composition (13) spirally arranged in a mass (12) of ice composition, comprising a mould (1) in the form of a body of revolution which is designed to receive the ice confectionery, a support (9) arranged in such a way that it always keeps the same orientation in space and an integrated extrusion assembly (4) fixed to the support (9), comprising an extrusion tube (5) for the ice composition and a tube (7) for dispensing the crispy composition of which the nozzle (42) is substantially parallel to that (43) of the extrusion tube for the ice composition and in the vicinity thereof, characterized in that it comprises means (11,17) for imparting a continuous horizontal rotational movement (f3) to the the support (9) relative to the mould (1) and means (10,31,41,34,37) for imparting an alternating vertical movement (f1,f2) to the support (9) relative to the mould (1) and in that the extrusion assembly (4) is offset relative to the axis of the mould.

6. An apparatus as claimed in claim 5, characterized in that the support (9) comprises a horizonal plate (11) connected to the rotation means (17) and a vertical bracket (31) supporting the translation means (10,41,34).

7. A apparatus as claimed in claim 6, characterized in that the rotation means comprise a motor (17) which acts on a crank (18) connected to the horizontal plate (11) of the support (9), said horizontal plate being guided by two orthogonal sliding runners (25,29).

8. An apparatus as claimed in claim 6, characterized in that the translation means comprise a lifting and lowering jack (34) of which the body (35) fixed to the bracket (31) and of which the piston acts on a sliding runner (10) to which the extrusion assembly (4) is fixed.

9. An apparatus as claimed in claim 5, characterized in that the translation means comprise two lifting and lowering jacks acting one after the other.

10. An apparatus for the production of an article of ice confectionery containing flakes of crispy composition (13) spirally arranged in a mass (12) of ice composition, comprising a mould (1) in the form of a body of revolution which is designed to receive the ice confectionery, a support (9) arranged in such a way that it always keeps the same orientation in space and an integrated extrusion assembly (4) fixed to the support (9), comprising an extrusion tube (5) for the ice composition and a tube (7) for dispensing the crispy composition of which the nozzle (42) is substantially parallel to that (43) of the extrusion tube for the ice composition and in the vicinity thereof, characterized in that the support (9) is fixed, in that the mould (1) is rotated about its axis and, at the same time, vertically displaced relative to the extrusion assembly (4) by displacement means and in that the extrusion assembly (4) is offset relative to the axis of the mould.

## Patentansprüche

1. Verfahren zur Herstellung eines Speiseeisartikels, der Blätter aus einer Krokantmasse (13) enthält, die spiralförmig in seiner Masse (12) angeordnet sind,
wobei eine rotationssymetrische Form (1) mit Hilfe einer integrierten Extrudiereinheit (4) gefüllt wird, die eine Düse (7) zur Dosierung von Krokantmasse aufweist, deren Mundstück (42) annähernd parallel zu dem Mundstück (43) der Extrudierdüse für die Eismasse und in deren Nähe angeordnet ist,
**dadurch gekennzeichnet**,
daß die Extrudiereinheit (4) gegenüber der Achse der Form (1) exzentrisch angeordnet ist,
daß sie mit einer kontinuierlichen Drehbewegung (f3) beaufschlagt wird, wobei sie stets die gleiche Orientierung im Raum beibehält,
daß die Extrudiereinheit (4) in die Form (1) abgesenkt wird (f1), dann wieder angehoben wird (f2), wobei sie aus den Düsen übereinanderliegende Bänder aus Eiskonfekt (12) und Krokantmasse (13) in der Weise ausgibt, daß die Resultierende der Bewegungen bei der Extrusion eine Schraubenbewegung bildet,
und daß die genannten Düsen (5, 7) den mittleren Querschnitt der Form (1) so überstreichen, daß eine gute Überdeckung der abgelegten Bänder gewährleistet ist.

2. Verfahren zur Herstellung eines Speiseeisartikels, der Blätter aus einer Krokontmasse (33) enthält, die spiralförmig in seiner Masse (12) angeordnet sind,
wobei eine rotationssymetrische Form (1) mit Hilfe einer integrierten Extrudiereinheit (4) gefüllt wird, die eine Düse (7) zur Dosierung von Krokantmasse aufweist, deren Mundstück (42) annähernd parallel zu dem Mundstück (43) der Extrudierdüse für die Eismasse und in deren Nähe angeordnet ist,
**dadurch gekennzeichnet**,
daß die Form (1) so montiert wird, daß sie die Extrudiereinheit (4) abdeckt,
daß die Extrudiereinheit (4) fest und relativ zu der Achse der Form (1) exzentrisch angeordnet wird,
daß die Form (1) während des Extrudiervorgangs mit einer aus einer Drehung um ihre Achse und einer vertikalen Translation kombinierten Bewegung beaufschlagt wird, deren Resultierende eine Schraubenbewegung von oben nach unten ist,
daß die Düsen (5, 7) übereinanderliegende Bänder aus Eiskonfekt (12) und Krokantmasse (13) ablegen,
und daß die genannten Düsen (5, 7) den mittleren Querschnitt der Form (1) so überstreichen, daß eine gute Überdeckung der abgelegten Bänder gewährleistet ist.

3. Verfahren nach Anspruch 1 oder 2, dadurch gekennzeichnet, daß der Artikel ein Eiscremekegel ist, der Schokoladenblätter enthält und daß die Form (1) eine Waffel ist, die innen mit einer feinen Schokoladenschicht überzogen ist.

4. Speiseeisartikel, der mit Hilfe des Verfahrens nach einem der Ansprüche 1 bis 3 hergestellt ist.

5. Vorrichtung zur Herstellung eines Speiseeisartikels, der Blätter aus einer Krokantmasse (13) enthält, die spiralförmig in einer Speiseeismasse (12) angeordnet sind,
mit einer rotationssymetrischen Form (1) für die Aufnehmen des Eiskonfekts,
mit einem Träger (9), der so angeordnet ist, daß er stets die gleiche Orientierung im Raum beibehält,
und mit einer an dem Träger (9) befestigten integrierten Extrudiereinheit (4), die eine Extrudierdüse (5) zum Extrudieren der Speiseeismasse aufweist, sowie eine Dosierdüse (7) zum Dosieren von Krokantmasse, wobei das Mundstück (42) der Dosierdüse (7) annähernd parallel zu dem Mundstück (43) der Extrudierdüse für die Speiseeismasse und in deren Nähe angeordnet ist,
**dadurch gekennzeichnet**,
daß Mittel (11, 17) vorgesehen sind zur Erzeugung einer kontinuierlichen horizontalen Drehbewegung (f3) des Trägers (9) relativ zu der Form (1), wobei die Form (1) fest angeordnet ist, sowie Mittel (10, 31, 41, 34, 37) zur Erzeugung einer alternierenden Vertikalbewegung (f1, f2) des Trägers (9) relativ zu der Form (1),
und daß die Extrudiereinheit (4) gegenüber der Achse der Form exzentrisch angeordnet ist.

6. Vorrichtung nach Anspruch 5, dadurch gekennzeichnet, daß der Träger (9) eine horizontale Platte (11) aufweist, die mit den Mitteln (17) zur Erzeugung der Drehbewegung verbunden ist, sowie eine vertikale Konsole (31), die die Mittel (10, 41, 34) zur Erzeugung der Translationsbewegung trägt.

7. Vorrichtung nach Anspruch 6, dadurch gekennzeichnet, daß die Mittel zur Erzeugung der Drehbewegung einen Motor (17) umfassen, der auf eine Kurbel (18) einwirkt, die mit der horizontalen Platte (11) des Trägers (9) im Eingriff steht, wobei die horizontale Platte (11) von zwei orthogonalen Gleitbahnen (25, 29) geführt wird.

8. Vorrichtung nach Anspruch 6, dadurch gekennzeichnet, daß die Mittel zur Erzeugung der Translationsbewegung eine Aufwärts-Abwärts-Zylindereinheit (34) umfassen, dessen Körper (35) an der Konsole (31) befestigt ist und dessen Kolben auf eine Gleitbahn (10) einwirkt, an der die Extrudiereinheit (4) befestigt ist.

9. Vorrichtung nach Anspruch 5, dadurch gekennzeichnet, daß die Mittel zur Erzeugung der Translationsbewegung zwei Aufwärts-Abwärts-Zylindereinheiten umfassen, von denen die eine hinter der anderen wirksam ist.

10. Vorrichtung zur Herstellung eines Speiseeisartikels, der Blätter aus einer Krokantmasse (13) enthält, die spiralförmig in einer Speiseeismasse (12) angeordnet sind,
mit einer rotationssymetrischen Form (1) für die Aufnehmen des Eiskonfekts,
mit einem Träger (9), der so angeordnet ist, daß er stets die gleiche Orientierung im Raum beibehält,
und mit einer an dem Träger (9) befestigten integrierten Extrudiereinheit (4), die eine Extrudierdüse (5) zum Extrudieren der Speiseeismasse aufweist, sowie eine Dosierdüse (7) zum Dosieren von Krokantmasse, wobei das Mundstück (42) der Dosierdüse (7) annähernd parallel zu dem Mundstück (43) der Extrudierdüse für die Speiseeismasse und in deren Nähe angeordnet ist,
**dadurch gekennzeichnet**,
daß der Träger (9) fest ist,
daß die Form (1) von den Mitteln zum Bewegungsantrieb mit einer Bewegung beaufschlagt wird, die aus einer Drehung um ihre Achse und einer vertikalen Translation relativ zu der Extrudiereinheit (4) zusammengesetzt ist,
und daß die Extrudiereinheit (4) gegenüber der Achse der Form exzentrisch angeordnet ist.
